# FASCICULE DE BREVET EUROPEEN

(11) **EP 2 825 423 B1**
(45) Date de publication et mention de la délivrance du brevet: **24.08.2016**
(21) Numéro de dépôt: 13708860.5
(22) Date de dépôt: 13.03.2013
(51) Int. Cl.: B60R 25/021

(54) **ANTIVOL À SUPERCONDAMNATION POUR COLONNE DE DIRECTION DE VÉHICULE AUTOMOBILE**
SPERRE MIT RIEGELSICHERUNG FÜR EINE KRAFTFAHRZEUGLENKSÄULE
LOCK WITH BOLT SECURING FOR A VEHICLE STEERING COLUMN

(30) Priorité: 14.03.2012 FR 1200773
(43) Date de publication de la demande: 21.01.2015
(73) Titulaire: Valeo Securité Habitacle, 94046 Créteil Cedex (FR)
(72) Inventeur: POGGI, Patrice, F-94046 Créteil Cedex (FR); PERRIN, Christophe, F-94046 Créteil Cedex (FR)
(74) Mandataire: Gaillarde, Frédéric F. Ch.
(86) Numéro de dépôt international: PCT/EP2013/055177
(87) Numéro de publication internationale: WO 2013/135787

(56) Documents cités:
- EP-B1- 0 806 328
- FR-A1- 2 952 332
- FR-A1- 2 964 350

## Description

La présente invention concerne un antivol destiné à sécuriser un mécanisme de colonne de direction de véhicule automobile. Plus particulièrement, la présente invention concerne un antivol mettant en oeuvre un pêne mobile à même d'être verrouillé par un moyen de supercondamnation.

Les antivols comportent des moyens de verrouillage comportant un pêne monté mobile dans un corps d'antivol entre une position décondamnée dans laquelle il est destiné à être disposé à distance d'une colonne de direction et une position condamnée dans laquelle il est destiné à bloquer ladite colonne. Le pêne est commandé en déplacement par l'intermédiaire d'un verrou rotatif intégré dans le corps d'antivol.

Certains antivols à sécurité renforcée comprennent en outre un moyen de supercondamnation apte à bloquer le pêne en position condamnée, en cas de tentative d'effraction. Une personne mal intentionnée peut en effet décider d'arracher le verrou pour accéder au pêne afin de le désactiver en vue de libérer la rotation de la colonne de direction. La présence des moyens de supercondamnation permet de maintenir le pêne dans sa position condamnée après arrachement du verrou, de sorte que la colonne de direction demeure malgré tout bloquée en rotation.

Pour cela, le moyen de supercondamnation comporte un élément de blocage configuré pour bloquer le pêne en position condamnée. L'élément de blocage est retenu dans une position passive à l'écart du pêne au moyen d'une première extrémité d'un élément déclencheur du moyen de supercondamnation. La deuxième extrémité de l'élément déclencheur est fixée au verrou. En cas d'arrachement du verrou par une personne malveillante, l'élément déclencheur, dont la deuxième extrémité est solidaire du verrou, est entraîné avec ce dernier et ne retient plus l'élément de blocage qui se translate alors vers le pêne pour le bloquer en position condamnée.

Il existe cependant aujourd'hui de nouveaux modes d'attaques des antivols à supercondamnation. On connaît par exemple l'attaque « à la colle ». Le corps d'antivol qui loge le verrou est généralement réalisé en matière plastique. L'attaque à la colle consiste alors à percer localement le corps d'antivol, à proximité de l'élément déclencheur. La personne mal intentionnée comble ensuite le trou qu'elle a percé par de la colle. Ladite colle fixe l'élément déclencheur, généralement sous la forme d'une pige, au corps d'antivol. Une fois l'élément déclencheur collé en partie au corps d'antivol, la rupture du verrou et la désolidarisation de ce dernier du reste du corps d'antivol entraîne la rupture dudit élément déclencheur en deux parties, une partie restant collée au corps d'antivol. Ladite partie collée restant donc en place, le moyen de supercondamnation n'est donc pas activé et ne peut donc pas venir bloqué le pêne en position condamné.

Le voleur peut alors retirer le verrou sans risquer de déclencher le moyen de supercondamnation et neutraliser ensuite le moyen de verrouillage en repoussant le pêne à l'encontre de son rappel élastique.

Le document EP806328B décrit un antivol selon le préambule de la revendication 1.

Un des buts de la présente invention est de proposer un antivol robuste, simple à mettre en oeuvre et présentant une meilleure résistance aux attaques de personnes malveillantes et plus particulièrement aux attaques dites « de colle ».

A cet effet, l'invention à pour objet un antivol à supercondamnation pour colonne de direction de véhicule automobile selon la revendication 1.

Selon une ou plusieurs caractéristiques de l'antivol, prise seule ou en combinaison :
- le dispositif de protection est disposé au moins partiellement autour de l'élément déclencheur ce qui permet un protection contre le perçage et l'attaque à la colle selon un angle d'attaque non nul par rapport à l'élément déclencheur,
- le dispositif de protection est formé par une surface refermée sur elle-même s'étendant selon un axe de révolution ce qui permet une fabrication et une installation simple,
- l'élément déclencheur s'étend selon un axe directeur sensiblement colinéaire à l'axe de révolution du dispositif de protection ce qui permet d'obtenir une protection de l'élément déclencheur sur la partie potentiellement accessible par perçage,
- l'axe directeur de l'élément déclencheur et l'axe de révolution sont confondus ce qui permet de limiter l'encombrement de l'antivol de l'invention,
- l'élément déclencheur présente une forme sensiblement allongée dont une première extrémité libre est destinée à appuyer sur l'élément de blocage pour le retenir à distance du pêne et une deuxième extrémité est fixée au verrou de l'antivol,
- l'élément déclencheur présente des zones fusibles ce qui permet de rompre l'élément déclencheur lorsque des efforts peu importants sont exercés sur ledit élément déclencheur,
- la deuxième extrémité de l'élément déclencheur présente une forme coopérant avec une forme complémentaire du verrou de sorte à bloquer et à fixer la position en rotation et en translation entre l'élément déclencheur et le verrou ce qui permet une bonne liaison entre le verrou et l'élément déclencheur en cas d'arrachement dudit verrou,
- la forme de la deuxième extrémité et celle du verrou sont sensiblement en H,
- le corps d'antivol comporte une première et une deuxième partie de corps d'antivol et un verrou destiné à être inséré dans ladite deuxième partie de corps d'antivol, ladite première partie de corps d'antivol recevant le moyen de verrouillage et moyen de supercondamnation, ledit dispositif de protection de l'élément déclencheur formant au moins partiellement un écran entre l'élément déclencheur et la deuxième partie de corps d'antivol ce qui permet d'obtenir un assemblage et une fabrication simple et rapide dudit corps d'antivol,
- la deuxième partie du corps d'antivol (9) comporte un matériau plastique ce qui permet de simplifier la fabrication dudit corps et d'alléger ce dernier.

En cas d'attaque à la colle, le dispositif de protection de l'antivol de l'invention reçoit la colle injectée dans le trou percé dans le corps d'antivol à la place de l'élément déclencheur. L'élément déclencheur reste donc intact et libre de fonctionner. La translation de l'élément déclencheur en cas d'arrachement du verrou n'est donc pas entravée par la colle. Le dispositif de protection constitue donc un moyen de protection simple, peu onéreux et peu encombrant pour renforcer l'inviolabilité de l'antivol notamment face à des attaques dites « à la colle ».

D'autres avantages et caractéristiques apparaîtront à la lecture de la description d'un exemple non limitatif de réalisation de l'invention, ainsi que sur les figures annexées sur lesquelles :
- la figure 1 représente une vue en perspective d'un exemple d'antivol à supercondamnation pour colonne de direction de véhicule automobile,
- la figure 2 représente l'antivol de la figure 1 auquel on a retiré la deuxième partie du corps d'antivol,
- la figure 3 représente l'antivol de la figure 2 auquel on a également retiré la première partie de corps d'antivol et le dispositif de protection, et dans lequel on a représenté le guide pêne en transparence pour mieux visualiser le fonctionnement du moyen de supercondamnation, et
- la figure 4 représente une vue en perspective de l'élément déclencheur et du dispositif de protection de l'antivol.

Sur ces figures, les éléments identiques portent les mêmes numéros de référence.

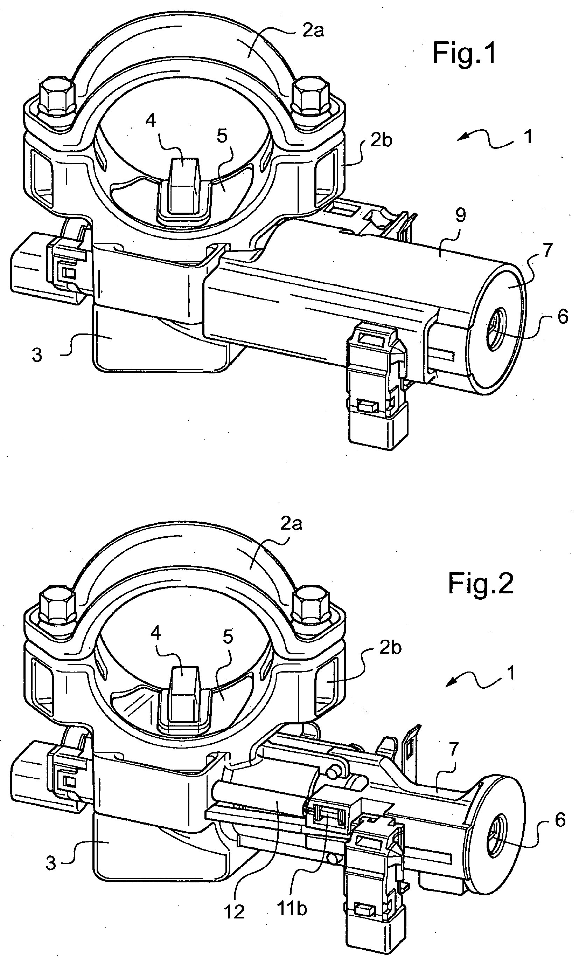

Les figures 1 à 4 représentent un exemple de réalisation d'un antivol à supercondamnation pour colonne de direction pour véhicule automobile 1. L'antivol 1 comporte un collier de serrage présentant un premier demi-collier 2a et un deuxième demi-collier 2b, configurés pour s'assembler autour d'une colonne de direction (non représentée).

Le deuxième demi-collier 2b est intégré dans une première partie corps d'antivol 3 qui loge un moyen de verrouillage de la colonne de direction et un moyen de supercondamnation agencé pour verrouiller le moyen de verrouillage en position condamnée suite à une tentative d'effraction de l'antivol 1. La première partie du corps d'antivol 3 est par exemple en matériau « Zamak » de manière à présenter une bonne résistance mécanique en position sur la colonne, protégeant les moyens de verrouillage et de supercondamnation.

Le moyen de verrouillage comporte un pêne 4 monté coulissant dans la première partie du corps d'antivol 3, via un guide-pêne 5 de l'antivol 1, entre une position décondamnée dans laquelle il est en position escamotée arrière, à distance de la colonne de direction et une position condamnée (figures 1, 2 et 3) dans laquelle il est destiné à bloquer la colonne en faisant saillie du deuxième demi-collier 2b pour coopérer classiquement par emboîtement dans la colonne de direction. Le moyen de verrouillage comporte en outre un moyen d'entraînement (non visible) du pêne 4 apte à entraîner le pêne 4 en position condamnée ou décondamnée. Le déplacement du moyen d'entraînement est commandé par un rotor de verrou 6 entraîné en rotation par la clé adaptée.

Un verrou 7 recevant notamment le rotor de verrou 6, est destiné à être inséré et solidarisé à l'intérieur d'une deuxième partie du corps d'antivol 9 du corps d'antivol de l'antivol 1 (figure 1). La deuxième partie du corps d'antivol 9 comporte par exemple un matériau plastique.

De façon connue en soi, une came de l'antivol 1 est destinée à être solidarisée à l'extrémité arrière du rotor de verrou. Une fois le verrou 7 monté dans la deuxième partie du corps d'antivol 9, le rotor de verrou 6 et la came tournent ensemble, une première partie de la came entraînant le moyen d'entraînement du pêne 4.

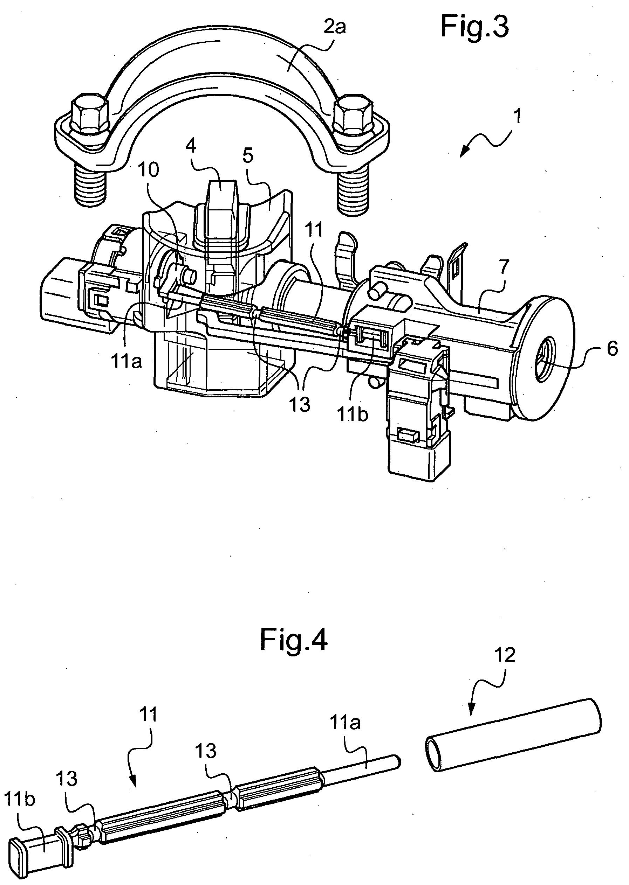

En outre, le moyen de supercondamnation comporte un élément de blocage 10 configuré pour bloquer le pêne 4 en position condamnée (figure 3), un élément déclencheur 11 et un dispositif de protection 12 (figure 2).

Lorsqu'une personne malveillante désolidarise le verrou 7, l'élément déclencheur 11 est également retiré du dispositif antivol de l'invention. L'élément de blocage 10 vient alors bloqué le pêne 4.

Comme on peut mieux le voir sur les figures 3 et 4, l'élément déclencheur 11 peut présenter une forme générale allongée selon un axe directeur dont une première extrémité libre 11a est destinée à appuyer sur l'élément de blocage 10 pour le retenir à distance du pêne 4 et une deuxième extrémité 11b est fixée au verrou 7. A titre d'exemple, ledit élément déclencheur 11 est sous la forme d'une tige.

L'élément déclencheur 11 peut présenter des zones fusibles 13 formées par des amincissements, notamment disposés le long de l'axe directeur dudit élément déclencheur 11. Lesdites zones fusibles 12 constituent des amorces de rupture rendant l'élément déclencheur « cassant ». Ainsi, la sensibilité de déclenchement du moyen de supercondamnation est améliorée.

La deuxième extrémité 11b présente par exemple, une forme coopérant avec une forme complémentaire du verrou 7 de sorte à positionner et à fixer la position en rotation et en translation entre l'élément déclencheur 11 et le verrou 7. Ladite forme peut être sensiblement en H, à savoir être définie par deux axes longitudinaux sensiblement parallèles et un axe transversale perpendiculaire aux axes directeurs longitudinaux.

Le dispositif de protection 12 est disposé entre le corps d'antivol 3 et l'élément de déclenchement de sorte à former au moins partiellement un écran entre l'élément déclencheur 11 et le corps d'antivol. Plus précisément dans l'exemple illustratif, le dispositif de protection 12 forme au moins partiellement un écran entre l'élément déclencheur 11 et la deuxième partie du corps d'antivol 9.

Le dispositif de protection 12 est par exemple disposé au moins partiellement autour de l'élément déclencheur 11 ce qui permet un protection contre le perçage et l'attaque à la colle selon un angle d'attaque non nul par rapport à l'élément déclencheur. Il peut être constitué par une plaque et/ou être par exemple refermé sur lui-même et/ou présenter une forme géométrique de révolution, telle qu'au moins partiellement cylindrique.

Dans le cas où le dispositif de protection est formé par une surface refermée sur elle-même s'étendant selon un axe de révolution, ceci permet une fabrication et une installation simple dudit dispositif de protection.

Dans le cas où l'élément déclencheur s'étend selon un axe directeur sensiblement colinéaire à l'axe de révolution du dispositif de protection, on obtient ainsi une meilleure protection de l'élément déclencheur sur la partie potentiellement accessible par perçage.

Dans cette perspective, l'axe directeur de l'élément déclencheur et l'axe de révolution sont confondus ce qui permet de limiter l'encombrement de l'antivol de l'invention.

Les figures 2 et 5 représentent un exemple de dispositif de protection 12 de forme cylindrique disposé autour de l'élément déclencheur 11.

Le dispositif de protection 12 peut être entièrement fermé sur lui-même formant un cylindre dont la section transversale peut être de toute forme, notamment circulaire, oblongue, carré, rectangulaire, triangulaire.

Le dispositif de protection 12 peut ne pas être une surface fermée sur elle-même laissant une partie ouverte. Dans le cas où le dispositif de protection 12 présente un axe directeur, ladite ouverture peut être disposée le long dudit axe directeur. Dans ce cas, le dispositif de protection présente sa partie pleine disposée entre l'élément déclencheur et le corps d'antivol de sorte à protéger ledit élément déclencheur contre tout type d'attaque par le corps de l'antivol.

Le dispositif de protection 12 est par exemple en matériau plastique ou acier.

En position passive, l'élément de blocage 10 est maintenu à l'écart par la première extrémité libre 11a de l'élément déclencheur 11 qui appuie sur ledit élément de blocage 10 pour le retenir. L'élément de blocage 10 est en position passive car il ne bloque pas le pêne 4 (figure 3).

En cas d'arrachement du verrou 7 par une personne mal intentionnée, l'élément déclencheur 11, dont la deuxième extrémité 11b est solidaire du verrou 7, est entraîné avec le verrou 7. L'élément de blocage 10 qui n'est plus retenu, se translate pour bloquer le pêne en position condamnée. Pour ce faire, ledit élément de blocage 10 peut être reçu dans une cavité aménagée dans le pêne 4.

En cas de perçage du corps d'antivol 9 en vue d'une attaque « à la colle », le dispositif de protection 12 reçoit alors la colle injectée dans l'orifice percée dans le corps d'antivol à la place de l'élément déclencheur 11, laissant ce dernier intact.

Ainsi, en cas d'arrachement du verrou 7, l'élément déclencheur 11 n'est plus retenu et ne peut donc plus retenir l'élément de blocage 10. L'élément de blocage 10 peut donc venir bloquer le pêne. Seul le dispositif de protection 12 formant un écran de protection à l'élément déclencheur 11 reçoit la colle et est donc collé.

Si la personne malveillante veut percer un autre trou ou approfondir son trou déjà percé, il doit faire subir audit élément déclencheur 11 des efforts importants qui entraînent la rupture dudit élément déclencheur 11. La rupture de l'élément déclencheur 11 entraîne le retrait de la deuxième extrémité 11b rompue avec le verrou 7. La première extrémité libre 11a n'étant plus contrainte vers l'élément de blocage 10, celui-ci n'est plus retenu, ce qui déclenche sa translation vers la position condamnée du pêne 4.

Le dispositif de protection 12 constitue donc un moyen de protection simple, peu onéreux et peu encombrant pour renforcer l'inviolabilité de l'antivol 1 notamment face à des attaques dites « à la colle ».

## Revendications

1. Antivol à supercondamnation pour colonne de direction de véhicule automobile comprenant :
- un moyen de verrouillage comportant un pêne (4) monté mobile entre une position décondamnée dans laquelle il est destiné à être disposé à distance d'une colonne de direction et une position condamnée dans laquelle il est destiné à bloquer ladite colonne,
- un moyen de supercondamnation comportant un élément de blocage configuré pour bloquer le pêne (4) en position condamnée, ledit élément de blocage étant sollicité contre ledit pêne (4) et retenu à distance du pêne (4) par un élément déclencheur (11) du moyen de supercondamnation, et
- un corps d'antivol (3, 9) logeant le moyen de supercondamnation et le moyen de verrouillage,
le moyen de supercondamnation comportant un dispositif de protection (12) de l'élément déclencheur (11) disposé entre l'élément déclencheur (11) et le corps d'antivol (3, 9) de sorte à former un écran entre ces derniers, **caractérisé en ce que** le dispositif de protection (12) est disposé au moins partiellement autour de l'élément déclencheur (11) et
**en ce que** ledit dispositif de protection (12) est formé par une surface refermée sur elle-même s'étendant selon un axe de révolution.

2. Antivol selon la revendication précédente, **caractérisé en ce que** l'élément déclencheur s'étend selon un axe directeur sensiblement colinéaire à l'axe de révolution du dispositif de protection.

3. Antivol selon la revendication précédente, **caractérisé en ce que** l'axe directeur de l'élément déclencheur et l'axe de révolution sont confondus.

4. Antivol selon l'une des revendications précédentes, **caractérisé en ce que** l'élément déclencheur (11) présente une forme sensiblement allongée dont une première extrémité libre (11a) est destinée à appuyer sur l'élément de blocage pour le retenir à distance du pêne (4) et une deuxième extrémité (11b) est fixée au verrou (7) de l'antivol (1).

5. Antivol selon la revendication précédente, **caractérisé en ce que** l'élément déclencheur (11) présente des zones fusibles.

6. Antivol selon l'une des revendications 4 ou 5, **caractérisé en ce que** la deuxième extrémité (11b) de l'élément déclencheur (11) présente une forme coopérant avec une forme complémentaire du verrou (7) de sorte à bloquer et à fixer la position en rotation et en translation entre l'élément déclencheur (11) et le verrou (7).

7. Antivol selon la revendication précédente, **caractérisé en ce que** la forme de la deuxième extrémité et celle du verrou sont sensiblement en H.

8. Antivol selon l'une quelconque des revendications précédentes, **caractérisé en ce que** le corps d'antivol (3, 9) comporte une première et une deuxième partie de corps d'antivol (3, 9) et un verrou (7) destiné à être inséré dans ladite deuxième partie de corps d'antivol (9), ladite première partie de corps d'antivol (3) recevant le moyen de verrouillage (4) et le moyen de supercondamnation, ledit dispositif de protection (12) de l'élément déclencheur (11) formant au moins partiellement un écran entre l'élément déclencheur (11) et la deuxième partie de corps d'antivol (9).

9. Antivol selon la revendication 8, **caractérisé en ce que** la deuxième partie du corps d'antivol (9) comporte un matériau plastique.

## Patentansprüche

1. Diebstahl mit Deadlocks für Kraftfahrzeuglenksäule, umfassend:
- verriegelungsmittel, umfassend einen Bolzen (4) angebracht ist beweglich zwischen einer entriegelten Position, in der es beabsichtigt ist, weg von der Position einer Lenksäule und einer verriegelten angeordnet zu werden, in dem es beabsichtigt ist, die die Säule zu blockieren,
- mittel deadlocking ein Blockierelement umfasst, konfiguriert, um den Bolzen (4) in verriegelter Position zu blockieren, wobei das Blockierungselement gegen gedrängt wird, wobei die Klinke (4) und gehalten von der Schraube (4) durch einen Auslöser (11) der Durchschnitt von Deadlocks und
- der Sperrkörper (3, 9) die Deadlocks Mittel und das Sperrmittel aufnimmt,
superlocking der Mittelwert eine Schutzvorrichtung (12) des Auslösers (11) zwischen dem Auslöser (11) angeordnet und dem Schlosskörper (3, 9), um einen Schirm zwischen diesen zu bilden , **dadurch gekennzeichnet, dass** die Schutzvorrichtung ( 12) zumindest teilweise um den Auslöser angeordnet ist (11) und
daß die Schutzeinrichtung ( 12 ) durch eine geschlossene Oberfläche auf sich selbst entlang einer Drehachse erstreckende gebildet.

2. Schloss nach dem vorhergehenden Anspruch, **dadurch gekennzeichnet, dass** der Auslöser sich entlang einer Achse im Wesentlichen kollinear Direktor auf die Drehachse der Schutzeinrichtung erstreckt.

3. Diebstahlsicherungsvorrichtung gemäß dem vorhergehenden Anspruch, **dadurch gekennzeichnet, dass** die Richtachse des Verschlusselementes und die Drehachse zusammenfallen .

4. Airbag nach einem der vorhergehenden Ansprüche , **dadurch gekennzeichnet, dass** der Auslöser (11 ) eine im wesentlichen längliche Form mit einem ersten freien Ende (11a ) dazu bestimmt ist, das Verriegelungselement zu drücken, um den Abstand zu halten der Bolzen ( 4) und ein zweites Ende ( 11b ) mit dem Riegel (7) befestigt des Schlosses ( 1) ist.

5. Schloss nach dem vorhergehenden Anspruch, **dadurch gekennzeichnet, daß** der Auslöser ( 11) schmelzbar Bereiche umfasst.

6. Schloß nach einem der Ansprüche 4 oder 5, **dadurch gekennzeichnet, daß** das zweite Ende ( 11b) des Auslösers ( 11 ) eine Form mit einer komplementären Form des Riegels zusammenwirkt , (7 ), um zu blockieren, und Fixieren der Position in Rotation und Translation zwischen dem Auslöser (11) und der Riegel ( 7) .

7. Schloss nach dem vorhergehenden Anspruch, **dadurch gekennzeichnet, dass** die Form des zweiten Endes und der des Verriegelungs wesentlichen H sind.

8. Schloß nach einem der vorhergehenden Ansprüche, **dadurch gekennzeichnet, dass** der Schlosskörper (3, 9 ) einen ersten und einen zweiten Abschnitt des Schlosskörpers (3, 9) und einem Riegel ( 7) eingesetzt in dem zweiten Teil des Verriegelungsgehäuses ( 9), wobei der erste Teil des Verriegelungskörpers (3) die Aufnahme der Verriegelungsmittel ( 4) und die Riegelmittelzu , wobei die Schutzvorrichtung ( 12) des das Auslöseelement (11) zumindest teilweise einen Schirm zwischen dem Auslöser (11) und dem zweiten Teil des Schlosskörpers (9) bildet.

9. Schloß nach Anspruch 8, **dadurch gekennzeichnet, dass** der zweite Teil des Schlosskörpers (9) ein Kunststoffmaterial umfasst.

## Claims

1. Theft with deadlocking for motor vehicle steering column comprising:
- locking means comprising a bolt (4) mounted movably between an unlocked position in which it is intended to be disposed away from a steering column and a locked position in which it is intended to block the said column,
- means deadlocking comprising a blocking member configured to block the bolt (4) in locked position, said blocking member being urged against said latch (4) and held away from the bolt (4) by a trigger (11) the average of deadlocking and
- a lock body (3, 9) accommodating the deadlocking means and the locking means, the means superlocking comprising a protection device (12) of the trigger (11) disposed between the trigger (11) and the lock body (3, 9) so as to form a screen therebetween, **characterized in that** the protective device (12) is disposed at least partially around the trigger (11) and
**in that** said protection device (12) is formed by a closed surface on itself extending along an axis of revolution.

2. Antitheft device according to the preceding claim, **characterized in that** the trigger extends in

3. A lock according to the preceding claim, **characterized in that** the director axis of the shutter element and the axis of revolution coincide.

4. Airbag according to one of the preceding claims, **characterized in that** the trigger (11) has a substantially elongated shape including a first free end (11a ) is intended to press the locking element to retain the distance the bolt ( 4) and a second end (11b ) is fixed to the latch (7) of the lock (1)

5. Lock according to the preceding claim , **characterized in that** the trigger (11) comprises fusible areas.

6. A lock according to one of Claims 4 or 5, **characterized in that** the second end ( 11b) of the trigger (11 ) has a shape cooperating with a complementary shape of the latch ( 7 ) so as to block and fixing the position in rotation and translation between the trigger (11) and the latch ( 7).

7. Lock according to the preceding claim, **characterized in that** the shape of the second end and that of the lock are substantially H.

8. A lock according to any one of the preceding claims, **characterized in that** the lock body ( 3, 9) comprises a first and a second portion of lock body ( 3, 9) and a latch ( 7) for to be inserted in said second portion of lock casing (9 ), said first portion of lock body ( 3) receiving the locking means (4) and the deadlocking means , said protection device ( 12) of the the triggering member ( 11) at least partially forming a screen between the trigger (11) and the second part of lock body ( 9).

9. A lock according to claim 8, **characterized in that** the second part of the lock body ( 9) comprises a plastic material.
